# EUROPEAN PATENT APPLICATION

(11) **EP 4 772 593 A1**
(43) Date of publication of application: **08.07.2026**
(21) Application number: 24859859.1
(22) Date of filing: 28.08.2024
(51) Int. Cl.: C09J 175/04, B05D 7/24, B32B 27/40, C08G 18/10, C08G 18/80, C09J 11/06, G02B 1/04, G02C 7/00

(54) **ADHESIVE COMPOSITION, LAMINATE, OPTICAL ARTICLE, LENS, EYEGLASSES, AND METHOD FOR PRODUCING LAMINATE**

(30) Priority: 30.08.2023 JP 2023140341
(71) Applicant: TOKUYAMA CORPORATION, Yamaguchi 745-8648 (JP)
(72) Inventor: SHIMIZU Yasutomo, Shunan-shi, Yamaguchi 745-8648 (JP); KAWASHIMA Takahiro, Shunan-shi, Yamaguchi 745-8648 (JP)
(74) Representative: Kraus & Lederer PartGmbB
(86) International application number: PCT/JP2024/030815
(87) International publication number: WO 2025/047830

(57) **Abstract**

Provided are: a first adhesive composition containing a urethane prepolymer having an isocyanate group at a terminal, a blocked isocyanate having an isocyanate group protected by a blocking agent, and an organic solvent; and a second adhesive composition containing a water-dispersible urethane resin, a blocked isocyanate having an isocyanate group protected by a blocking agent, and water. Also provided are a laminate, an optical article, a lens, and eyeglasses that include a coating film of the first or second adhesive composition, and a method for producing a laminate.

## Description

### TECHNICAL FIELD

The present disclosure relates to an adhesive composition, a laminate, an optical article, a lens, eyeglasses, and a method for producing the laminate.

### BACKGROUND ART

Urethane-based adhesives are known as a type of adhesives. Urethane-based adhesives are reactive adhesives that perform bonding by utilizing an addition reaction between polyisocyanate and polyol. Urethane-based adhesives are roughly classified into moisture-curable one-pack type adhesives, and two-pack type adhesives that are prepared by mixing an isocyanate compound-containing solution and a polyol-containing solution immediately before use. For example, a moisture-curable one-pack type adhesive contains a solvent and an isocyanate group-containing urethane prepolymer obtained by reacting polyisocyanate, polyol and a chain extender. For a moisture-curable one-pack type adhesive, an adhesive coating film is formed by a reaction between an isocyanate group-containing urethane prepolymer and moisture in the air. For the purpose of improving preservation stability of one-pack type adhesives, techniques for protecting an isocyanate group of a urethane prepolymer with a blocking agent have been developed.

### Citation List

### Patent Documents

Patent Document 1: Japanese Unexamined Patent Application, Publication No. 2019-26668
Patent Document 2: PCT International Publication No. WO2018/230513
Patent Document 3: PCT International Publication No. WO2021/172404
Patent Document 4: Japanese Unexamined Patent Application, Publication No. 2004-261973

### DISCLOSURE OF THE INVENTION

### Problems to be Solved by the Invention

An object of the present disclosure is to provide an adhesive composition capable of forming a coating film with renewable adhesiveness; a laminate, an optical article, a lens, and eyeglasses, which include the coating film, and a method for producing the laminate.

### Means for Solving the Problems

According to the present disclosure, a first adhesive composition is provided. The first adhesive composition contains a urethane prepolymer having an isocyanate group on its terminal, a blocked isocyanate having an isocyanate group protected by a blocking agent, and an organic solvent.

According to the present disclosure, a second adhesive composition is provided. The second adhesive composition contains a water-dispersible urethane resin, a blocked isocyanate having an isocyanate group protected by a blocking agent, and water.

According to the present disclosure, a laminate is provided. The laminate includes a first optical substrate and a urethane(urea) resin layer having a blocked isocyanate group. The urethane(urea) resin layer is laminated on the first optical substrate. The urethane(urea) resin layer is a coating film made of the first or second adhesive composition according to the present disclosure.

According to the present disclosure, an optical article is provided. The optical article includes the laminate according to the present disclosure.

According to the present disclosure, a lens is provided. The lens includes the optical article according to the present disclosure.

According to the present disclosure, eyeglasses are provided. The eyeglasses include the lens according to the present disclosure.

According to the present disclosure, a method for producing the laminate is provided. The method includes applying the first or second adhesive composition onto at least one main surface of the first optical substrate and then drying the composition to form a urethane(urea) resin layer having a blocked isocyanate group.

### Effects of the Invention

The present disclosure makes it possible to provide an adhesive composition capable of forming a coating film with renewable adhesiveness; a laminate, an optical article, a lens, and eyeglasses, which include the coating film, and a method for producing the laminate.

### BRIEF DESCRIPTION OF THE DRAWINGS

FIG. 1 is a schematic sectional view illustrating an example of a first laminate according to the present disclosure;
FIG. 2 is a schematic sectional view illustrating another example of the first laminate according to the present disclosure;
FIG. 3 is a schematic sectional view illustrating an example of a second laminate according to the present disclosure;
FIG. 4 is a schematic sectional view illustrating another example of the second laminate according to the present disclosure; and
FIG. 5 is a schematic perspective view illustrating an example of eyeglasses according to the present disclosure.

### PREFERRED MODE FOR CARRYING OUT THE INVENTION

According to the present disclosure, a first adhesive composition and a second adhesive composition are provided. The first adhesive composition contains a urethane prepolymer having an isocyanate group on its terminal, a blocked isocyanate having an isocyanate group protected by a blocking agent, and an organic solvent. The second adhesive composition contains a water-dispersible urethane resin, a blocked isocyanate having an isocyanate group protected by a blocking agent, and water.

A coating film with renewable adhesiveness can be formed by using the first and second adhesive compositions. The reason for this is considered to be as follows. First, the first adhesive composition is applied and then an organic solvent is removed to obtain a first coating film. It is considered that, on the first coating film, isocyanate groups of some urethane prepolymers (-R-N=C=O) react with moisture in the air, hydroxy groups present on a surface of an object to be coated, and the like to produce a carbamic acid (-R-NHCOOH). Since the carbamic acid is active, amine (-R-NH₂) and carbon dioxide are produced by decomposition of the carbamic acid. This amine reacts with an isocyanate group of another urethane prepolymer (-R'-N=C=O) to form a cured urethaneurea resin (-R-NHCONH-R'-). This urethaneurea resin has an isocyanate group. Thus, the first coating film has adhesiveness. However, as described above, the adhesiveness of the first coating film is lost over time because the isocyanate group reacts with moisture in the air and disappears.

Herein, the first adhesive composition contains a blocked isocyanate together with a urethane prepolymer. In the blocked isocyanate, the isocyanate group as a reactive group is protected by a blocking agent that can be dissociated by heating. The first coating film contains this blocked isocyanate. The blocking agent can be dissociated from the blocked isocyanate in the first coating film by heating the first coating film, to form an isocyanate group. Thus, the adhesiveness of the first coating film can be renewed by heating the first coating film. In other words, an isocyanate group-containing coating film can be formed by heating the first coating film having the blocked isocyanate group.

Similarly, the first coating film obtained by applying the second adhesive composition and then removing water also contains a urethane(urea) resin and a blocked isocyanate. Thus, the adhesiveness of the coating film can be renewed in the same manner as described above by heating the first coating film.

### <First Adhesive Composition>

The first adhesive composition according to the present disclosure contains a urethane prepolymer having an isocyanate group on its terminal, a blocked isocyanate having an isocyanate group protected by a blocking agent, and an organic solvent. The first adhesive composition may be a moisture-curable one-pack type adhesive.

### [Urethane Prepolymer]

The urethane prepolymer has an isocyanate group on its terminal. The urethane prepolymer preferably has 2 or more isocyanate groups, or may have 2 or more and 6 or less isocyanate groups, more preferably 2 isocyanate groups. The urethane prepolymer has at least one type of bond selected from a group consisting of a urethane bond, a urea bond, a thiourethane bond, and a thiourea bond.

The urethane prepolymer has a number-average molecular weight of e.g. 800 or more and 100,000 or less. The urethane prepolymer has a number-average molecular weight of preferably 900 or more and 50,000 or less, more preferably 1,000 or more and 10,000 or less. This number-average molecular weight can be measured by gel permeation chromatography (GPC).

In the first adhesive composition, the proportion of the urethane prepolymer is e.g. 10 mass% or higher and 60 mass% or lower. This proportion is preferably 20 mass% or higher and 50 mass% or lower.

The urethane prepolymer may be either a first reactant or a second reactant. The first reactant is obtained by reacting a first polyisocyanate with a first poly(thi)ol. The second reactant is obtained by reacting the first reactant with a chain extender. The urethane prepolymer is preferably the second reactant. The first poly(thi)ol contains at least one of a first polyol and a first polythiol. In the production of the first or second reactant, a reaction solvent may be used, or heating treatment may be performed.

In the production of the first reactant, a ratio M2/M1 of a molar amount M2 of the first poly(thi)ol to a molar amount M1 of the first polyisocyanate is preferably 0.5 or higher and 0.95 or lower, more preferably 0.5 or higher and 0.9 or lower.

In the production of the second reactant, it is preferable to add a chain extender such that a ratio M4/M1 of a molar amount M4 of the chain extender to the molar amount M1 of the first polyisocyanate is 0.1 or higher and 0.5 or lower.

### (First Polyisocyanate)

The first polyisocyanate has 2 or more isocyanate groups. The first polyisocyanate may have 2 or more and 6 or less isocyanate groups, and it is more preferable that the first polyisocyanate is a diisocyanate having 2 isocyanate groups.

The first polyisocyanate has a relative molecular mass of e.g. 100 or more and 1000 or less, preferably 150 or more and 500 or less.

For example, the first polyisocyanate includes at least one selected from a group consisting of an aliphatic polyisocyanate compound, an alicyclic polyisocyanate compound, and an aromatic polyisocyanate compound. The first polyisocyanate preferably includes an aliphatic diisocyanate compound, an alicyclic diisocyanate compound, an aromatic diisocyanate compound, or a mixture thereof. The first polyisocyanate preferably includes an aromatic polyisocyanate compound, more preferably an aromatic diisocyanate compound.

For example, the aliphatic polyisocyanate compound includes at least one selected from a group consisting of tetramethylene-1,4-diisocyanate, hexamethylene-1,6-diisocyanate, octamethylene-1,8-diisocyanate, and 2,2,4-trimethylhexane-1,6-diisocyanate.

For example, the alicyclic polyisocyanate compound includes at least one selected from a group consisting of cyclobutane-1,3-diisocyanate, cyclohexane-1,3-diisocyanate, cyclohexane-1,4-diisocyanate, 2,4-methylcyclohexyl diisocyanate, 2,6-methylcyclohexyl diisocyanate, isophorone diisocyanate, norbornene diisocyanate, an isomer mixture of 4,4'-methylenebis(cyclohexyl isocyanate), hexahydrotoluene-2,4-diisocyanate, hexahydrotoluene-2,6-diisocyanate, hexahydrophenylene-1,3-diisocyanate, hexahydrophenylene-1,4-diisocyanate, 1,9-diisocyanato-5-methylnonane, 1,2-bis(isocyanatomethyl)cyclohexane, 2-isocyanato-4-[(4-isocyanatocyclohexyl)methyl]-1-methylcyclohexane, 2-(3-isocyanatopropyl)cyclohexyl isocyanate, and norbornane diisocyanate.

For example, the aromatic polyisocyanate compound includes at least one selected from a group consisting of phenylcyclohexylmethane diisocyanate, 4,4'-methylenebis(phenylisocyanate), an isomer mixture of 4,4'-methylenebis(phenylisocyanate), tolylene-2,3-diisocyanate, tolylene-2,4-diisocyanate, tolylene-2,6-diisocyanate, phenylene-1,3-diisocyanate, phenylene-1,4-diisocyanate, 1,3-bis(isocyanatomethyl)benzene, xylylene diisocyanate, tetramethylxylylene diisocyanate, 1,5-naphthalene diisocyanate, diphenyl ether diisocyanate, 1,3-diisocyanatomethylbenzene, 4,4'-diisocyanato-3,3'-dimethoxy(1,1'-biphenyl), 4,4'-diisocyanato-3,3'-dimethylbiphenyl, 1,2-diisocyanatobenzene, 1,4-bis(isocyanatomethyl)-2,3,5,6-tetrachlorobenzene, 2-dodecyl-1,3-diisocyanatobenzene, 1-isocyanato-4-[(2-isocyanatocyclohexyl)methyl]-2-methylbenzene, 1-isocyanato-3-[(4-isocyanatophenyl)methyl]-2-methylbenzene, 4-[(2-isocyanatophenyl)oxy]phenyl isocyanate, and diphenylmethane diisocyanate.

From the viewpoint of improving the hardness and the adhesiveness of the coating film, the first polyisocyanate preferably includes at least one selected from a group consisting of tolylene-2,4-diisocyanate, tolylene-2,6-diisocyanate, 4,4'-methylenebis(phenylisocyanate), an isomeric mixture of 4,4'-methylenebis(phenylisocyanate), 1,5-naphthalene diisocyanate, tolidine diisocyanate, triphenylmethane triisocyanate, tetramethylxylene diisocyanate, isophorone diisocyanate, norbornene diisocyanate, 1,2-bis(isocyanatomethyl)cyclohexane, cyclohexane-1,3-diisocyanate, and cyclohexane-1,4-diisocyanate.

The first polyisocyanate may be used alone or in combination of multiple types.

### (First Polyol)

The first polyol has 2 or more hydroxy groups. The first polyol may have 2 or more and 6 or less hydroxy groups, and is preferably a diol having 2 hydroxy groups. The first polyol preferably has a structure with hydroxy groups binding to both ends of a long chain including a repeating structure.

The first polyol has a number-average molecular weight of e.g. 100 or more and 5,000 or less. The first polyol has a number-average molecular weight of preferably 300 or more and 2,000 or less, more preferably 400 or more and 1,500 or less. This number-average molecular weight can be measured by GPC.

The first polyol includes at least one selected from a group consisting of an alkylene glycol, a polyether polyol, a polycarbonate polyol, a polyester polyol, and a polycaprolactone polyol.

The alkylene glycol includes at least one selected from a group consisting of ethylene glycol, 1,2-propylene glycol, 1,3-butanediol, 1,4-butanediol, 1,6-hexanediol, neopentyl glycol, dipropylene glycol, and diethylene glycol.

For example, the polyether polyol includes at least one selected from a group consisting of polypropylene glycol, polyethylene glycol, and polytetramethylene glycol.

For example, the polycarbonate polyol includes at least one selected from a group consisting of: a polycarbonate polyol obtained by phosgenation of one or more of low-molecular-weight polyols such as ethylene glycol, 1,2-propanediol, 1,3-propanediol, 2-methyl-1,3-propanediol, 1,2-butanediol, 1,3-butanediol, 1,4-butanediol, 1,5-pentanediol, 1,6-hexanediol, 1,8-octanediol, 1,9-nonanediol, 1,10-decanediol, 3-methyl-1,5-pentanediol, 2-ethyl-4-butyl-1,3-propanediol, diethylene glycol, dipropylene glycol, neopentyl glycol, cyclohexane-1,4-diol, cyclohexane-1,4-dimethanol, dimer acid diol, an ethylene oxide adduct or propylene oxide adduct of bisphenol A, bis(β-hydroxyethyl)benzene, xylylene glycol, glycerin, trimethylolpropane, and pentaerythritol; and a polycarbonate polyol obtained by transesterification with ethylene carbonate, diethyl carbonate, diphenyl carbonate, or the like. More preferably, the polycarbonate polyol is a low-molecular-weight polyol having a linear alkylene chain.

For the polycarbonate polyol, for example, "DURANOL^{®}" line manufactured by Asahi Kasei Corporation, "KURARAY POLYOL^{®}" line manufactured by KURARAY CO., LTD., "PLACCEL^{®}" line manufactured by Daicel Corporation, "NIPPOLAN^{®}" line manufactured by Tosoh Corporation, "ETERNACOLL^{®}" line manufactured by UBE Corporation, or the like may be used.

As the polyester polyol, a polyester polyol obtained by a condensation reaction of a polyhydric alcohol with a polybasic acid may be used. Examples of the polyhydric alcohol include ethylene glycol, 1,2-propanediol, 1,3-butanediol, 1,4-butanediol, 3-methyl-1,5-pentanediol, 1,6-hexanediol, 3,3'-dimethylolheptane, 1,4-cyclohexanedimethanol, neopentyl glycol, 3,3-bis(hydroxymethyl)heptane, diethylene glycol, dipropylene glycol, glycerin, and trimethylolpropane. Each of them may be used alone or in combination of two or more types. Examples of the polybasic acid include succinic acid, adipic acid, azelaic acid, sebacic acid, dodecanedicarboxylic acid, cyclopentanedicarboxylic acid, cyclohexanedicarboxylic acid, orthophthalic acid, isophthalic acid, terephthalic acid, and naphthalenedicarboxylic acid. Each of them may be used alone or in combination of two or more types.

As the polyester polyol, for example, "POLYLITE^{®}" line manufactured by DIC CORPORATION, "NIPPOLAN^{®}" line manufactured by Tosoh Corporation, "MAXIMOL^{®}" line manufactured by AIR WATER PERFORMANCE CHEMICAL INC., and the like may be used.

For example, the polycaprolactone polyol includes at least one selected from a group consisting of poly-ε-caprolactone, polycaprolactone diol, and polycaprolactone triol.

As the polycaprolactone polyol, for example, "PLACCEL^{®}" line manufactured by Daicel Corporation and the like may be used.

### (First Polythiol)

The first polythiol has 2 or more thiol groups or 1 or more hydroxy group, and 1 or more thiol group. The first polythiol may have 2 or more and 6 or less thiol groups, and is preferably a dithiol having 2 thiol groups. The first polythiol preferably has a structure with thiol groups binding to both ends of a long chain having a repeating structure.

The first polythiol has a number-average molecular weight of e.g. 100 or more and 2,000 or less. The first polythiol has a number-average molecular weight of preferably 300 or more and 1,500 or less, more preferably 400 or more and 1,200 or less. This number-average molecular weight can be measured by GPC.

Examples of the first polythiol include 1,10-decanedithiol, 1,8-octanedithiol, tetraethylene glycol bis(3-mercapto propionate), 1,4-butanediol bis(3-mercapto propionate), and 1,6-hexanediol bis(3-mercapto propionate).

### (Chain Extender)

The chain extender is blended for increasing the molecular weight of the urethane prepolymer.

The chain extender has 2 or more active hydrogen groups of at least one selected from a group consisting of a hydroxy group, an amino group, a carboxy group, and a thiol group. Preferably, the chain extender has a hydroxy group or amino group. The chain extender may have 2 or more and 6 or less active hydrogen groups, preferably 2 active hydrogen groups.

From the viewpoint of controllability for the chain extension reaction (controllability for the increase in molecular weight), it is preferable that the compound having the hydroxy groups has a molecular weight of 50 to 500 and 2 hydroxy groups in its molecule. Specifically, preferable examples of the compound having the hydroxy groups include an alkylene glycol such as ethylene glycol, 1,2-propanediol, 1,3-propanediol, 1,3-butanediol, 1,4-butanediol, propylene glycol, 1,6-hexanediol, and trimethylolpropane; and a polyalkylene glycol such as polypropylene glycol.

As the compound having an amino group, it is more preferable to use 3,3'-dichloro-4,4'-diaminodiphenylmethane, methylene dianiline, a sodium chloride complex of methylene dianiline, isophorone diamine, bis-(4-aminocyclohexyl)methane, or norbornane diamine. Above all, 3,3'-dichloro-4,4'-diaminodiphenylmethane and bis-(4-aminocyclohexyl)methane are preferable.

### [Blocked Isocyanate]

The blocked isocyanate has one or more isocyanate groups protected by a blocking agent. The number of the isocyanate groups protected by the blocking agent in the blocked isocyanate is preferably 2 or more, more preferably 3 or more, and may be 3 or more and 6 or less. The blocked isocyanate can be obtained e.g. by reacting a second polyisocyanate with a blocking agent. A commercially available blocked isocyanate may also be used.

The first adhesive composition has a blocked isocyanate content of e.g. 0.1 mass% or more and 30 mass% or less, preferably 1 mass% or more and 10 mass% or less.

In the first adhesive composition, the proportion of the blocked isocyanate to the total of the urethane prepolymer and the blocked isocyanate is e.g. 1 mass% or higher and 40 mass% or lower.

The blocked isocyanate has a relative molecular mass of e.g. 200 or more and 5,000 or less. The relative molecular mass is preferably 250 or more and 2,000 or less.

A ratio W1/W2 of the number-average molecular weight W1 of the urethane prepolymer to the relative molecular mass W2 of the blocked isocyanate is e.g. 1 or higher and 3,000 or lower, preferably 1 or higher and 1000 or lower.

### (Second Polyisocyanate)

The second polyisocyanate has 2 or more isocyanate groups. The number of the isocyanate groups in the second polyisocyanate may be 2 or more and 6 or less, preferably 3 or more. As the second polyisocyanate, the first polyisocyanate described above may be used. As the second polyisocyanate, at least one selected from a group consisting of a trimer and a biuret of the first polyisocyanate described above may be used.

Specific examples of the second polyisocyanate include at least one selected from a group consisting of a trimer of hexamethylene diisocyanate, a biuret of hexamethylene diisocyanate, and a trimer of isophorone diisocyanate.

### (Blocking Agent)

The blocking agent reacts with an isocyanate group (R-NCO) on the terminal of the urethane prepolymer to form a blocked isocyanate group (R-NH-CO-B: B is the blocking agent). The blocked isocyanate group has no reactivity with active hydrogen groups. The blocked isocyanate group can release the blocking agent on the terminal e.g. by heating to reproduce the isocyanate group.

The blocking agent is not particularly limited, and any known compound may be used. Specifically, it is possible to use at least one blocking agent selected from a group consisting of a pyrazole compound, an acid amide compound, an imidazole compound, a pyridine compound, an amine compound, an alcohol compound, a lactam compound, a phenol compound, an oxime compound, and an active methylene compound. The blocking agent may be used alone or in combination of two or more types.

As the blocking agent, it is preferable to use a pyrazole compound. Examples of the pyrazole compound include 3,5-dimethylpyrazole.

Examples of the alcohol compound include aliphatic alcohols such as methanol, ethanol, 2-propanol, n-butanol, sec-butanol, 2-ethyl-1-hexanol, 2-methoxyethanol, 2-ethoxyethanol, 2-butoxyethanol, and trifluoroalcohol.

Examples of the lactam compound include γ-butyrolactam, ε-caprolactam, and γ-valerolactam.

Examples of the phenol compound include phenol, cresol, ethylphenol, styrenated phenol, a hydroxybenzoic acid ester, and a mono- or di-alkylphenol having, as a substituent, an alkyl group with 4 or more carbon atoms. Specific examples of the phenol compound include: a monoalkylphenol such as n-propylphenol, i-propylphenol, n-butylphenol, sec-butylphenol, t-butylphenol, n-hexylphenol, 2-ethylhexylphenol, n-octylphenol, and n-nonylphenol; a dialkylphenol such as di-n-propylphenol, diisopropylphenol, isopropyl cresol, di-n-butylphenol, di-t-butylphenol, di-sec-butylphenol, di-n-octylphenol, di-2-ethylhexylphenol, and di-n-nonylphenol.

Examples of the oxime compound include acetoxime, methyl ethyl ketoxime, methyl isobutyl ketoxime, diethyl ketoxime, cyclopentanone oxime, and cyclohexanone oxime.

Examples of the active methylene compound include a malonic acid diester compound and an acetoacetic acid ester compound.

Examples of the malonic acid diester compound include dimethyl malonate, diethyl malonate, diisopropyl malonate, din-propyl malonate, di-n-butyl malonate, n-butyl ethyl malonate, n-butyl methyl malonate, t-butyl ethyl malonate, t-butyl methyl malonate, diethyl methyl malonate, dibenzyl malonate, diphenyl malonate, benzyl methyl malonate, ethylphenyl malonate, t-butylphenyl malonate, and isopropylidene malonate.

Examples of the acetoacetic acid ester compound include methyl acetoacetate, ethyl acetoacetate, isopropyl acetoacetate, n-propyl acetoacetate, t-butyl acetoacetate, n-butyl acetoacetate, benzyl acetoacetate, and phenyl acetoacetate.

### [Organic Solvent]

The organic solvent allows the urethane prepolymer and the blocked isocyanate to dissolve or disperse. For improving the preservation stability, it is preferable that the organic solvent has no active hydrogen group. For example, the organic solvent contains at least one selected from a group consisting of acetone, methyl ethyl ketone, methyl isobutyl ketone, diethyl ketone, cyclohexanone, dioxane, toluene, hexane, heptane, ethyl acetate, butyl acetate, dimethylformamide (DMF), tetrahydrofuran (THF), petroleum ether, and propylene glycol monomethyl ether.

The first adhesive composition has an organic solvent content of e.g. 30 mass% or more and 95 mass% or less, preferably 60 mass% or more and 90 mass% or less.

### [Other Additives]

The first adhesive composition may contain other additives in addition to the above components. Examples of other additives include various stabilizers such as a leveling agent, a photochromic compound, a UV absorber, an infrared absorber, a UV stabilizer, an antioxidant, a coloring inhibitor, an antistatic agent, a fluorescent dye, a dye, a pigment, and a fragrance; an additive, a silane coupling agent, a glycidyl compound, and the like.

As the leveling agent, for example, a silicone surfactant, or a fluorine-containing surfactant may be used. Specific examples of the silicone surfactant and the fluorine-containing surfactant include "L-7001", "L-7002", "L-7604", "FZ-2123", and "FZ-2104" manufactured by DuPont Toray Specialty Materials K.K.; "MEGAFAC F-470", "MEGAFAC F-1405", and "MEGAFAC F-479" manufactured by DIC Corporation; and "FLORAD FC-430" manufactured by 3M Japan Co., Ltd. The surfactant may be used in combination of two or more types.

The content of other additives in the first adhesive composition is e.g. 0.001 mass% or more and 10 mass% or less, preferably 0.01 mass% or more and 1 mass% or less.

The first adhesive composition may consist only of the urethane prepolymer having an isocyanate group on its terminal, the blocked isocyanate having an isocyanate group protected by a blocking agent, the organic solvent, and other additives, described above. In the first adhesive composition of this aspect, the proportion of the urethane prepolymer is e.g. 10 mass% or higher and 60 mass% or lower, the proportion of the blocked isocyanate is 1 mass% or higher and 20 mass% or lower, the proportion of other additives is 0.01 mass% or higher and 5 mass% or lower; and the proportion of the organic solvent is the remainder.

Typically, the first adhesive composition contains no polyol. If the first adhesive composition contains a polyol, the stability of the first adhesive composition may be deteriorated. The first adhesive composition has a polyol content of preferably 1 mass% or less, more preferably 0.1 mass% or less. The lower limit for the polyol content is, but not particularly limited to, 0 mass% as an example, or 100 mass ppm or more as another example.

Typically, the first adhesive composition contains no polyamine. If the first adhesive composition contains a polyamine, the stability of the first adhesive composition may be deteriorated. The first adhesive composition has a polyol content of preferably 1 mass% or less, more preferably 0.1 mass% or less. The lower limit for the polyamine content is, but not particularly limited to, 0 mass% as an example, or 100 mass ppm or more as another example.

Typically, the first adhesive composition does not contain any polymer having no reactive group such as a urethane resin. The content of the polymer having no reactive group in the first adhesive composition is preferably 1 mass% or less, more preferably 0.1 mass% or less. The lower limit for the polymer content is, but not particularly limited to, 0 mass% as an example, or 100 mass ppm or more as another example.

### <Second Adhesive Composition>

The second adhesive composition according to the present disclosure contains a water-dispersible urethane resin, a blocked isocyanate having an isocyanate group protected by a blocking agent, and water. The second adhesive composition may be a moisture-curable one-pack type adhesive.

The water-dispersible urethane resin may be a reactant between the aforementioned first polyisocyanate and first polyol. The water-dispersible urethane resin has no isocyanate group. The water-dispersible urethane resin is preferably particulate, more preferably colloidal particulate.

The water-dispersible urethane resin has an average particle diameter of e.g. 0.001 µm or larger and 0.100 µm or smaller, preferably 0.005 µm or larger and 0.050 µm or smaller, as determined by a light scattering method. This average particle diameter can be measured e.g. by a dynamic light scattering method.

Preferably, the water-dispersible urethane resin has a number-average molecular weight of 1000 or more and 100,000 or less. This number-average molecular weight can be measured by GPC.

The proportion of the water-dispersible urethane resin in the second adhesive composition is e.g. 10 mass% or higher and 60 mass% or lower. This proportion is preferably 20 mass% or higher and 50 mass% or lower.

The same blocked isocyanate as described above may be used. The second adhesive composition has a blocked isocyanate content of e.g. 0.1 mass% or more and 30 mass% or less, preferably 1 mass% or more and 10 mass% or less.

The proportion of water in the second adhesive composition is e.g. 30 mass% or higher and 95 mass% or lower, preferably 60 mass% or higher and 90 mass% or lower.

The second adhesive composition may consist only of the water-dispersible urethane resin, the blocked isocyanate having an isocyanate group protected by a blocking agent, water, and other additives. In this aspect of the second adhesive composition, the proportion of the water-dispersible urethane resin is e.g. 10 mass% or higher and 60 mass% or lower, the proportion of the blocked isocyanate is 1 mass% or higher and 20 mass% or lower, the proportion of other additives is 0.01 mass% or higher and 5 mass% or lower, and the proportion of water is the remainder.

Typically, the second adhesive composition contains no polyol. If the second adhesive composition contains a polyol, the stability of the second adhesive composition may be deteriorated. The second adhesive composition has a polyol content of preferably 1 mass% or less, more preferably 0.1 mass% or less. The lower limit for the polyol content is, but not particularly limited to, 0 mass% as an example, or 100 mass ppm or more as another example.

Typically, the second adhesive composition contains no polyamine. If the second adhesive composition contains a polyamine, the stability of the second adhesive composition may be deteriorated. The second adhesive composition has a polyamine content of preferably 1 mass% or less, more preferably 0.1 mass% or less. The lower limit for the polyamine content is, but not particularly limited to, 0 mass% as an example, or 100 mass ppm or more as another example.

Typically, the second adhesive composition contains no prepolymer having a reactive group such as a urethane prepolymer. The second adhesive composition has a prepolymer content of preferably 1 mass% or less, more preferably 0.1 mass% or less. The lower limit for the prepolymer content is, but not particularly limited to, 0 mass% as an example, or 100 mass ppm or more as another example.

### <First Laminate>

A first laminate according to the present disclosure includes a first optical substrate and a urethane(urea) resin layer having a blocked isocyanate group. The urethane(urea) resin layer is laminated on the first optical substrate. The urethane(urea) resin layer is a coating film made of the first or second adhesive composition according to the present disclosure. Herein, the urethane(urea) resin contains at least one of a urethane resin and a urethaneurea resin.

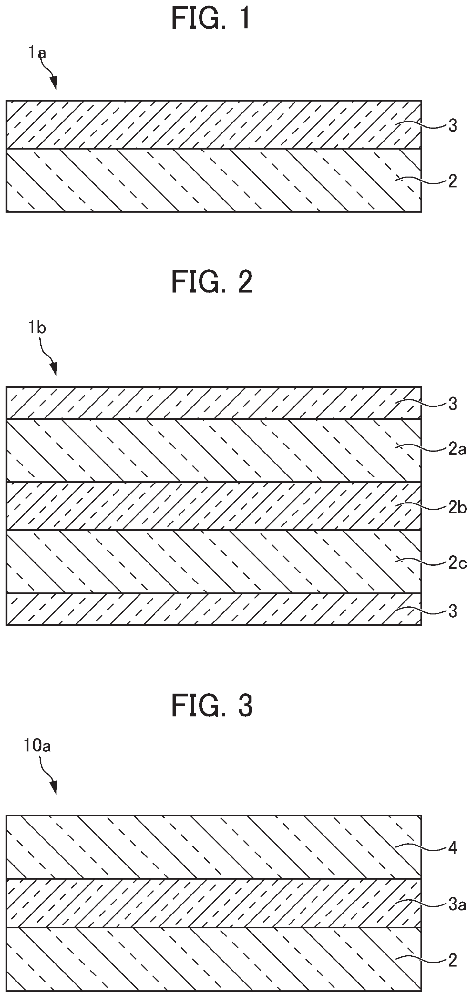

FIG. 1 is a schematic sectional view illustrating an example of the first laminate according to the present disclosure. A first laminate 1a illustrated in FIG. 1 includes a first optical substrate 2, and a urethane(urea) resin layer 3 having a blocked isocyanate group and laminated on one main surface of the first optical substrate 2. This urethane(urea) resin layer 3 having the blocked isocyanate group is a coating film obtained by applying the first or second adhesive composition according to the present disclosure and then drying the composition.

### [First Optical Substrate]

The first optical substrate includes a resin layer, a resin film, or a resin lens. The first optical substrate may be planar or curved. The resin lens may be a convex lens, a concave lens, or a plano lens. The first optical substrate may be produced by a 3D printer. The first optical substrate is preferably a resin lens or a saponified triacetyl cellulose (TAC) film.

The resin layer is a cured body of a curable composition. For example, the resin layer contains at least one resin selected from a group consisting of an acrylic resin, a methacrylic resin, a polyurethane resin, an epoxy resin, and a polyurethaneurea resin. For example, the curable composition may contain a polymerizable monomer such as a (meth)acrylate, or a reactive compound such as an isocyanate compound and a polyol. The curable composition may contain a functional dye.

For example, the resin film contains at least one resin selected from a group consisting of a cellulose resin, an acrylic resin, a methacrylic resin, a polyurethane resin, a polyurethaneurea resin, a polyamide resin, a polyester resin, a polyimide resin, an epoxy resin, a polyolefin resin, a polyvinyl alcohol resin, and a polycarbonate resin.

For example, the resin lens contains at least one resin selected from a group consisting of a polyester resin, a polyamide resin, an allyl resin, an acrylic resin, a methacrylic resin, a polyurethane resin, a polyurethaneurea resin, a polythiourethane resin, a polythiourethaneurea resin, a polythioepoxy resin, and a polycarbonate resin.

As the cellulose resin, a commercially available resin can be used. As the cellulose resin, for example, it is possible to desirably use an acetyl cellulose such as a triacetyl cellulose and a diacetyl cellulose; a propyl cellulose such as a tripropyl cellulose and a dipropyl cellulose; or the like.

As the polyamide resin, a commercially available resin can be used. As the polyamide resin, for example, it is possible to use a polyamide resin obtained by a polycondensation reaction of an ω-aminocarboxylic acid such as ε-caprolactam, 10-aminodecanoic acid lactam, and ω-lauric lactam; a polyamide resin obtained by a copolycondensation reaction of a diamine with a dicarboxylic acid; or a copolymer thereof. From the viewpoints of mechanical strength, solvent resistance, and transparency, it is preferable to use a polyamide resin obtained by a copolycondensation reaction.

Specific examples of an alicyclic polyamide resin include "TROGAMID^{®}" manufactured by Polyplastics-Evonik Corporation; "GRILAMID^{®}" and "GRILAMID TR^{®}" manufactured by EMS-GRIVORY. The alicyclic polyamide resin may be used alone or in combination of two or more types.

As the polyester resin, a commercially available resin can be used. Examples of the polyester resin include a polycondensate of a dicarboxylic acid such as terephthalic acid and isophthalic acid with a diol such as ethylene glycol, butylene glycol, 1,4-cyclohexanedimethanol. Above all, it is possible to desirably use polyethylene terephthalate, polybutylene terephthalate, a copolymer thereof, or the like.

As the (meth)acrylic resin, a commercially available resin can be used. As the (meth)acrylic resin, for example, it is possible to desirably use a resin including a homopolymer such as methyl methacrylate, or a copolymer of multiple (meth)acrylic monomers.

As the polyurethane resin and polyurethaneurea resin, a commercially available resin can be used. The polyurethane resin or polyurethaneurea resin has a urethane bond and/or urea bond in its molecule. Specifically, a known resin obtained by reacting a diisocyanate compound such as isophorone diisocyanate with a polyol compound such as polycarbonate polyol and polyester polyol is used. Furthermore, it is possible to desirably use a polyurethane resin or polyurethaneurea resin obtained by reacting a chain extender such as a low molecular weight diol, triol, diamine, and triamine.

As the polyimide resin, a commercially available resin can be used. As the polyimide resin, it is possible to desirably use a polymer of an aromatic tetracarboxylic acid with an aromatic diamine. Examples of the aromatic tetracarboxylic acid include pyromellitic acid, 3,3',4,4'-biphenyltetracarboxylic acid, 2,3',3,4'-biphenyltetracarboxylic acid, 3,3',4,4'-benzophenone tetracarboxylic acid, 2,3,6,7-naphthalene tetracarboxylic acid, 2,2-bis(3,4-dicarboxyphenyl)propane, and pyridine-2,3,5,6-tetracarboxylic acid; or aromatic tetracarboxylic acids derived from their acid anhydrides or acid dianhydrides, or ester compounds or halides of the acids. Examples of the aromatic diamine include paraphenylene diamine, metaphenylene diamine, benzidine, paraxylylene diamine, 4,4'-diaminodiphenyl ether, 3,4'-diaminodiphenyl ether, 4,4'-diaminodiphenylmethane, 4,4'-diaminodiphenylsulfone, 3,3'-dimethyl-4,4'-diaminodiphenylmethane, 1,5-diaminonaphthalene, 3,3'-dimethoxybenzidine, 1,4-bis(3-methyl-5-aminophenyl)benzene, and their derivatives.

As the epoxy resin, a commercially available resin can be used. As the epoxy resin, for example, it is possible to desirably use a resin obtained by a condensation reaction of bisphenol A, bisphenol F, or the like with epichlorohydrin, another polyfunctional epoxy resin, a biphenyl epoxy resin, or the like.

As the polyolefin resin, a commercially available resin can be used. As the polyolefin resin, for example, it is possible to desirably use polypropylene, polyethylene, an ethylene-propylene copolymer, an ethylene-α-olefin copolymer, or a propylene-α-olefin copolymer.

As the polyvinyl alcohol (PVA) resin, a commercially available resin can be used. The substrate may consist only of a PVA resin or may contain other resins. Examples of other resins include an aldehyde-modified polyvinyl formal, polyvinyl acetal, and polyvinyl butyral.

The first optical substrate has a thickness of e.g. 1.0 µm or larger and 10 mm or smaller. The first optical substrate may have a thickness of 10 µm or larger and 1000 µm or smaller.

### (Modification Example)

The first optical substrate may be a laminate. For example, the first optical substrate may be a binder sheet. The binder sheet includes a pair of optical substrates and an adhesive layer located between these optical substrates to bond them to each other. The binder sheet has a thickness of e.g. 1.0 µm or larger and 1 mm or smaller, and may have a thickness of 100 µm or larger and 1000 µm or smaller.

The adhesive layer may be a functional layer containing a resin and a functional dye. For example, the functional layer is a cured adhesive composition containing a urethaneurea resin or urethaneurea prepolymer and a functional dye. The urethaneurea prepolymer can be produced e.g. by the same method for the aforementioned second reactant. The urethaneurea resin is obtained e.g. by reacting a urethane prepolymer with an amine compound or water as a reaction terminator. For example, the functional dye contains at least one selected from a group consisting of a photochromic compound, a UV absorber, a blue light absorber, an infrared absorber, a dye, and an electrochromic compound. As the photochromic compound, for example, at least one selected from a group consisting of a chromene compound, a fulgide compound, and a spirooxazine compound is used. The chromene compound includes a compound having a 1-benzopyran skeleton, a spiropyran compound having a spiropyran skeleton, or a naphthopyran compound having a naphthopyran skeleton. The naphthopyran compound includes an indenonaphthopyran compound having an indenonaphthopyran skeleton.

FIG. 2 is a schematic sectional view illustrating another example of the first laminate according to the present disclosure. A first laminate 1b illustrated in FIG. 2 includes a first A optical substrate 2a, a first C optical substrate 2c, an adhesive layer 2b located therebetween, the urethane(urea) resin layer 3 having a blocked isocyanate group and covering one surface of the first A optical substrate 2a, and the urethane(urea) resin layer 3 having a blocked isocyanate group and covering one surface of the first C optical substrate 2c. This urethane(urea) resin layer 3 having the blocked isocyanate group is a coating film obtained by applying the first or second adhesive composition according to the present disclosure and then drying the composition.

### <Second Laminate>

A second laminate according to the present disclosure includes the first laminate and a second optical substrate according to the present disclosure. The second optical substrate is laminated on a blocked isocyanate group-containing urethane(urea) resin layer, or a urethane(urea) resin layer having an isocyanate group and formed by dissociation of the blocking agent from the blocked isocyanate group.

The second optical substrate includes a resin layer, a resin film, or a resin lens. As the second optical substrate, the same substrate as the first optical substrate may be used. The first optical substrate may be a resin film, and the second optical substrate may be a resin lens. Alternatively, the first optical substrate may be a resin lens and the second optical substrate may be a resin lens. Alternatively, the first optical substrate may be a resin lens and the second optical substrate may be a resin layer. The second optical substrate may be produced using a 3D printer. Preferably, the second optical substrate contains at least one selected from a group consisting of an acrylic resin, a polyurethane resin, a polyurethaneurea resin, a polythiourethane resin, a polythiourethaneurea resin, a polythioepoxy resin, and an allyl resin.

FIG. 3 is a schematic sectional view illustrating an example of the second laminate according to the present disclosure. A second laminate 10a illustrated in FIG. 3 includes the first optical substrate 2, the urethane(urea) resin layer 3a laminated on one main surface of the second optical substrate 2, and a second optical substrate 4 laminated on the urethane(urea) resin layer 3a.

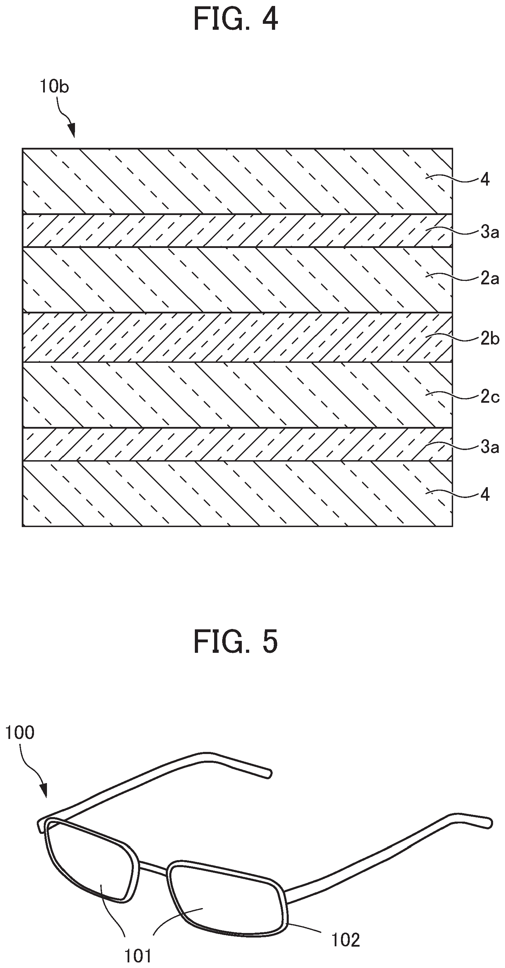

FIG. 4 is a schematic sectional view illustrating another example of the second laminate according to the present disclosure. A second laminate 10b illustrated in FIG. 4 includes the first A optical substrate 2a, the first C optical substrate 2c, the adhesive layer 2b located therebetween, the urethane(urea) resin layer 3a that covers one surface of the first A optical substrate 2a, the urethane(urea) resin layer 3a that covers one surface of the first C optical substrate 2c, and the second optical substrate 4 that covers the main surfaces of each urethane(urea) resin layer 3a.

### <Method for Producing First and Second Laminates>

The method for producing the first laminate according to the present disclosure includes applying the first or second adhesive composition according to the present disclosure onto at least one main surface of the first optical substrate and then drying the composition to form a urethane(urea) resin layer having a blocked isocyanate group.

The method for producing the second laminate according to the present disclosure may include heating the first laminate at 60 to 150°C to dissociate the blocking agent from the blocked isocyanate group, thereby obtaining an isocyanate group-containing urethane(urea) resin layer.

The method for manufacturing the second laminate according to the present disclosure may include forming a coating film made of a curable composition on an isocyanate group-containing urethane(urea) resin layer, and curing the coating film.

The method for producing the first and second laminates will be explained below in detail.

First, the first and second adhesive compositions are prepared by mixing their components. These adhesive compositions are applied onto at least one main surface of the first optical substrate. As the application method, an immersion method or a coating method may be adopted, or a 3D printer may be used. The first optical substrate may be subjected to surface treatment such as etching treatment, alkaline treatment, and corona treatment. The coated film is dried e.g. at 25°C or higher and 130°C or lower to form the first coating film. In this way, the first laminate is obtained. The drying temperature may be determined depending on the thermal stability of the selected blocked isocyanate. That is, the coated film is dried so that the blocking agent for the blocked isocyanate does not dissociate. This first coating film has both the isocyanate group and the blocked isocyanate group.

Subsequently, the isocyanate group is eliminated from this coating film e.g. by reacting the isocyanate group with moisture in the air. The presence or absence of the isocyanate group in the coating film can be confirmed e.g. by an infrared (IR) spectroscopy. After elimination of the isocyanate group, the first laminate having the first coating film is heated at 60°C or higher and 150°C or lower for e.g. 0.25 hour or longer and 24 hours or shorter to dissociate the blocking agent for the blocked isocyanate group. Thereby, a second coating film having an isocyanate group derived from the blocked isocyanate can be obtained.

The second optical substrate is laminated on this second coating film to obtain the second laminate. The method of laminating the second optical substrate is not particularly limited. The second optical substrate as an independent film may be laminated on the second coating film, or alternatively a curable composition may be applied onto the second coating film and dried, and the resulting coating film is cured to form the second optical substrate. As the method of applying the curable composition, an immersion method or a spin coating method may be adopted, or a 3D printer may be used.

The second optical substrate may be laminated on the first coating film before the isocyanate group disappears. By heating the laminate obtained in this way, the second laminate with higher adhesiveness can be obtained.

### <Optical Article>

An optical article according to the present disclosure includes the first or second laminate according to the present disclosure.

Examples of the optical article include a binder sheet, a lens, eyeglasses, a window material for houses or automobiles, a liquid crystal display, a sun visor, and a watch. The lens includes a semi-finished lens and a finished lens.

FIG. 5 is a schematic perspective view illustrating an example of eyeglasses according to the present disclosure. Eyeglasses 100 illustrated in FIG. 5 include lenses 101 and a frame 102 that supports the lenses 101. The lenses 101 include the optical article according to the present disclosure.

### EXAMPLES

The present invention will be explained in more detail with reference to several examples described below. These examples are merely intended to explain the present invention, and the gist and scope of the present invention are not limited to these examples.

### <Example 1>

### [Preparation of First Adhesive Composition]

Into a reaction vessel equipped with a stirrer, 142 g of polycarbonate diol (DURANOL, manufactured by Asahi Kasei Corporation) containing 1,5-pentanediol and hexanediol as raw materials and having a number-average molecular weight of 500, 90 g of mixture of 2,4-tolylene diisocyanate and 2,6-tolylene diisocyanate in a ratio of 80 mass%:20 mass% (TDI80), and 58 g of toluene were added, and mixed uniformly. The temperature of this mixture was adjusted to 90°C and subjected to a urethanization reaction.

Furthermore, to a solution containing a first precursor obtained by the above method, 3.9 g of propylene glycol (PG) as a chain extender and 177 g of toluene were added, the temperature was adjusted to 75°C, and the mixture was subjected to a chain extension reaction to prepare an isocyanate group-containing urethane prepolymer. To a mixture of 100 g of the obtained urethane prepolymer, 76.6 g of ethyl acetate, and 0.06 g of leveling agent "L7001" manufactured by DuPont Toray Specialty Materials K.K., a blocked isocyanate (B-1) was added so that a solid content was 5.6 g, and the mixture was thoroughly stirred under nitrogen atmosphere until the mixture became uniform, to obtain a first adhesive composition. As the blocked isocyanate (B-1), "TRIXENE BI 7982" manufactured by GSI Creos Corporation was used. The first adhesive composition had a solid content of 30 mass%.

### [Production of First Optical Substrate]

As the first optical substrate, a binder sheet was used. The binder sheet had a three-layer structure composed of a first A optical substrate, a photochromic adhesive layer, and a first C optical substrate. The binder sheet was prepared as follows.

First, a photochromic adhesive composition for forming a photochromic adhesive layer was prepared. To a 2 L reaction vessel, 100 g of isophorone diisocyanate, 315 g of polycarbonate diol having a number-average molecular weight of 1,000, and 40 g of diethyl ketone were added to obtain a mixture. Under nitrogen atmosphere, this mixture was stirred at 150 rpm at 100°C for 5 hours to obtain a reaction liquid containing a first prepolymer. The reaction endpoint was confirmed by a back titration method for the isocyanate group.

To the first prepolymer-containing reaction liquid at 10°C, 560 g of diethyl ketone and 150 g of tert-butyl alcohol were added, and then the liquid temperature was maintained at 15°C. To this reaction liquid, 21.3 g of bis-(4-aminocyclohexyl)methane was added dropwise, and the mixture was reacted at 15°C for 1 hour to obtain a reaction liquid containing a second prepolymer. The second prepolymer-containing reaction liquid had a solid content of 37.6 mass%. The second prepolymer had a number-average molecular weight of 13,000. The second prepolymer had a softening point of 98°C.

Subsequently, 100 g of the second prepolymer-containing reaction liquid, 1.02 g of photochromic compound PC1, 0.34 g of ethylenebis(oxyethylene)bis[3-(5-tert-butyl-4-hydroxy-m-tolyl) propionate], and 0.05 g of leveling agent "L7001" manufactured by DuPont Toray Specialty Materials K.K. were mixed and stirred at room temperature to obtain a photochromic adhesive composition.

The photochromic compound PC1 is a compound represented by the following formula.

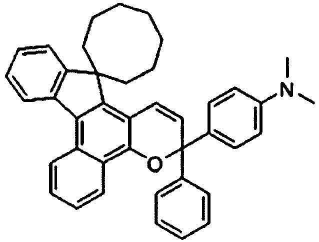

Subsequently, a saponified TAC film having a thickness of 60 µm was prepared as the first A optical substrate and the first C optical substrate. A contact angle of this TAC film was 10°. Hereinafter, this film is also referred to as TAC1. For the measurement of the contact angle, DROPMASTER 500 manufactured by Kyowa Interface Science Co., Ltd. was used. Water droplet was dropped to a surface of a sheet sample, an angle formed between water droplet and the surface of the sheet sample was measured, and this measured angle was defined as a contact angle.

Subsequently, the photochromic adhesive composition was applied onto a PET (polyethylene terephthalate) film (PUREX film with a silicon coating film, manufactured by Toyobo Film Solutions Ltd.) using a bar coater to obtain a third coating film. This third coating film was dried at 100°C for 5 minutes, and then the PET film was peeled off from the coating film to obtain a photochromic adhesive sheet having a thickness of about 30 µm. The first A optical substrate, the obtained photochromic adhesive sheet, and the first C optical substrate were laminated in this order to obtain a structure. The structure had a rectangular strip shape. One end portion of the structure in the longitudinal direction was left uncoated with no adhesive composition.

This structure was degassed under a conditions of 13 Torr at 40°C for 16 hours, and then heated at 100°C for 6 hours to obtain a binder sheet.

### [Production of First Laminate]

The first adhesive composition was applied onto the surface of the first A optical substrate and the surface of the first C optical substrate of the binder sheet and dried at 70°C for 15 minutes to obtain a coating film made of a urethaneurea resin. The coating film had a thickness of 10 µm.

### [Manufacture of Second Laminate]

The surface of the first laminate was subjected to curved surface processing. The first laminate after the curved surface processing was placed in an inner notched portion of the gasket. This gasket was placed inside a glass mold such that the first laminate was located in a hollow portion of the glass mold. The glass mold was configured so as to form a lens having a diopter D of 6.00, a diameter of 83 mm, and a thickness of 7.5 mm. A curable composition for the urethaneurea resin was injected into the hollow portion of the glass mold. After the injection of the curable composition, the glass mold was placed in an air furnace to cure the curable composition at 120°C for 10 hours. After the polymerization, the gasket and mold were detached, and the laminate was heated in an oven at 110°C for 1 hour. This operation was repeated to obtain a total of 3 lenses.

The curable composition for the urethaneurea resin was prepared as described below.

First, 100 parts by mass of polyester polyol including adipic acid and 1,6-hexanediol and having a number-average molecular weight of 1,000, 78 parts by mass of isomer mixture of 4,4'-methylenebis(cyclohexyl isocyanate), and 17 parts by mass of 2,4-diamino-3,5-diethyl-toruen/2,6-diamino-3,5-diethyl-toluene as an aromatic diamine curing agent were prepared.

A mixture of the above polyester polyol with an isomer mixture of 4,4'-methylenebis(cyclohexyl isocyanate) was heated under dry nitrogen at 140°C for 10 minutes to produce a prepolymer. This prepolymer was cooled to 70°C and left to stand for 24 hours. The aromatic diamine curing agent was mixed in the prepolymer to obtain a curable composition.

### <Examples 2 to 6 and Comparative Example 1>

The first and second laminates were produced in the same manner as in Example 1, except that the first adhesive composition with the type or the amount of the blocked isocyanate changed as presented in Table 1 was used.

The following blocked isocyanates were used.
B-1: A solution obtained by dissolving, in a mixed solvent, a hexamethylene diisocyanate (HDI) trimer molecule having three isocyanate groups capped with 3,5-dimethylpyrazole. The mixed solvent is a mixture of petroleum naphtha with butyl acetate. Solid content: 65%. ("TRIXENE BI 7982" manufactured by GSI Creos Corporation)
B-2: A solution obtained by dissolving, in propylene glycol monomethyl ether, an isophorone diisocyanate (IPDI) trimer molecule having three isocyanate groups capped with 3,5-dimethylpyrazole. Solid content: 70%. ("TRIXENE BI 7951" manufactured by GSI Creos Corporation)
B-3: A solution obtained by dissolving, in a mixed solvent of propylene glycol monomethyl ether with ethyl acetate, a hexamethylene diisocyanate (HDI) biuret molecule having three isocyanate groups capped with 3,5-dimethylpyrazole. Solid content: 70%. ("TRIXENE BI 7960" manufactured by GSI Creos Corporation)

### <Example 7>

First, a first laminate with a curved surface processing was produced in the same manner as in Example 1. The first laminate with the curved surface processing was placed in an inner notched portion of a gasket. This gasket was placed inside the glass mold such that the first laminate was located in the hollow portion of the glass mold. The glass mold was configured so as to form a lens having a diopter D of 6.00, a diameter of 83 mm, and a thickness of 7.5 mm. A curable composition for forming a thiourethane resin was injected into the hollow portion of the glass mold. After the injection of the curable composition, the glass mold was gradually heated from 35°C to 130°C for 12 hours using an air furnace, and then held at 130°C for 0.5 hour. After the polymerization, the gasket and mold were detached, and the laminate was heated in an oven at 130°C for 3 hours. After the heating, the outer periphery of the cured body was polished using a lens grinder to obtain an optical article having a diameter of 70 mm. This operation was repeated to obtain a total of 3 lenses.

The curable composition for forming a thiourethane resin was prepared as described below. A curable composition was obtained by mixing 43.5 parts by mass of dicyclohexylmethane-4,4'-diisocyanate, 43.5 parts by mass of isophorone diisocyanate, 63.0 parts by mass of 1,2-bis[(2-mercaptoethyl)thio]-3-mercapto propane, and 0.1 part by mass of dibutyltin dilaurate as a polymerization initiator.

### <Example 8>

First, a first laminate with a curved surface was produced in the same manner as in Example 1. The first laminate with the curved surface processing was placed in the inner notched portion of the gasket. This gasket was placed inside the glass mold such that the first laminate was located in the hollow portion of the glass mold. The glass mold was configured so as to form a lens having a diopter D of 6.00, a diameter of 83 mm, and a thickness of 7.5 mm. This glass mold was heated at 120°C for 30 minutes to dissociate the blocking agent from the blocked isocyanate to reproduce the isocyanate group. Then, a curable composition for forming a thioepoxy resin was injected into the hollow portion of the glass mold. After the injection of the curable composition, the glass mold was gradually heated from 20°C to 90°C for 20 hours using an air furnace, and then held at 90°C for 1 hour. After the polymerization, the gasket and mold were detached, and the laminate was heated in an oven at 90°C for 1 hour. After the heating, the outer periphery of the cured body was polished using a lens grinder to obtain an optical article having a diameter of 70 mm. This operation was repeated to obtain a total of 3 lenses.

The curable composition for forming a thioepoxy resin was prepared as described below. A curable composition was obtained by mixing 95 parts by mass of bis(β-epithiopropylthio)ethane, 5 parts by mass of 2-mercaptoethanol, and 0.1 part by weight of tetrabutylammonium bromide as a polymerization catalyst.

### <Example 9>

### [Production of First Laminate]

As the first optical substrate, CR-39 (allyl resin plastic lens; refractive index=1.50) having a thickness of 2.0 mm was used. This first optical substrate was thoroughly degreased with acetone, then immersed in a 10 mass% sodium hydroxide aqueous solution at 50°C for 10 minutes, then thoroughly washed with warm water, and dried in a dryer at 70°C for 30 minutes. This first optical substrate was spin-coated with the first adhesive composition obtained in Example 1 using a spin coater 1H-DX2 manufactured by MIKASA CO., LTD. and dried under a condition of 25°C and 50% RH for 24 hours to produce a first laminate having a urethaneurea resin layer on the first optical substrate. At this time, the urethaneurea resin layer was set to have a film thickness of 10 µm. As a result of an IR (infrared spectroscopy) for the urethaneurea resin layer of this structure, there was no peak attributed to isocyanate groups at 2200 to 2300 cm⁻¹.

### [Production of Second Laminate]

The first laminate was heated at 120°C for 0.5 hour to dissociate the blocking agent from the blocked isocyanate, thereby reproducing the isocyanate group. As a result of an IR (infrared spectroscopy) for the urethaneurea resin layer after the heating, there was a peak attributed to isocyanate groups at 2200 to 2300 cm⁻¹.

Subsequently, the photochromic (meth)acrylate curable composition was prepared by mixing components listed below.
- (Meth)acrylate components:
   14G (polyethylene glycol dimethacrylate (ethylene glycol chain has an average chain length of 14 and an average molecular weight of 736)): 40 parts by mass
   A-400 (polyethylene glycol diacrylate (ethylene glycol chain has an average chain length of 9 and an average molecular weight of 508)): 21 parts by mass
   TMPT (trimethylolpropane trimethacrylate): 30 parts by mass
   PR1 (polyrotaxane synthesized according to Example 10 in PCT International Publication No. WO2018/030257): 3 parts by mass
   γ-methacryloyloxypropyl trimethoxysilane: 3 parts by mass
   GMA (glycidyl methacrylate): 1 part by mass
- Photochromic compound;
   PC1 (compound represented by the above formula): 2 parts by mass
- Photopolymerization initiator;
   Phenylbis(2,4,6-trimethylbenzoyl)-phosphine oxide (Trade name: Omnirad 819, manufactured by IGM Resins B.V.): 0.3 part by mass
- Stabilizer;
   Bis(1,2,2,6,6-pentamethyl-4-piperidyl) sebacate (Molecular weight: 508): 3 parts by mass
   Ethylenebis(oxyethylene) bis[3-(5-tert-butyl-4-hydroxy-m-tolyl)propionate] (BASF SE, Irganox 245): 1 part by mass

The urethaneurea resin layer of the first laminate was spin-coated with 2 g of the above photochromic (meth)acrylate curable composition at 100 rpm for 30 seconds, followed by 800 rpm for 10 to 20 seconds, so as to have a film thickness of 40 µm. Then, the photochromic (meth)acrylate curable composition was polymerized by irradiation with a light for 80 seconds using a metal halide lamp with an output power of 200 mW/cm² in a nitrogen gas atmosphere. Subsequently, the composition was further heated at 110°C for 3 hours to obtain a second laminate with a 40 µm-thick acrylic resin-based photochromic layer formed on the urethaneurea resin layer.

### <Comparative Example 2>

The first and second laminates were produced in the same manner as in Example 9, except that an adhesive composition containing no blocked isocyanate was used.

### <Evaluation Test>

### [Average Molecular Weight Measurement of Urethane Prepolymer]

The weight-average molecular weight of the urethane prepolymer was measured according to GLP under the following conditions. A liquid chromatograph apparatus (manufactured by Nihon Waters K.K.) was used. As a column, Shodex GPC KD-806M (exclusion limit molecular weight: 200,000,000) manufactured by Resonac Corporation was used. The measurement was performed using dimethylformamide (DMF) as a developing liquid at a flow rate of 1 mL/min and a temperature of 40°C. Using polystyrene as a reference sample, a weight-average molecular weight and a number-average molecular weight were determined by comparative conversion. A differential refractometer was used as a detector. The measurement was performed after the isocyanate group was deactivated by pre-treating the urethane prepolymer with butylamine. In this measurement method, the urethane prepolymer had a number-average molecular weight of 2,000.

### [Photochromic Property Measurement of Laminate]

The maximum absorption wavelengths, color optical densities, and color fading rates of the first laminates obtained in Examples 1 to 8 and Comparative Example 1, and of the second laminates obtained in Example 9 and Comparative Example 2 were measured.

Specifically, first, one surface of the laminate is irradiated with a light via Aeromass Filter (manufactured by Corning Incorporated) using a xenon lamp L-2480 (300 W) SHL-100 manufactured by Hamamatsu Photonics K.K. at 23°C for 120 seconds to develop a color for the photochromic compound. The beam intensity was set to 2.4 mW/cm² at 365 nm and 24 µW/cm² at 245 nm.

The maximum absorption wavelength (λmax) after the color development was measured using a spectrophotometer (instantaneous multichannel photoditector MCPD1000) manufactured by Otsuka Electronics Co.,Ltd.

An absorbancy ε (0) at the maximum absorption wavelength of the laminate that had not yet been irradiated with light by the xenon lamp was measured. Subsequently, the laminate was irradiated with a light by the xenon lamp with the above beam intensity for 120 seconds, and an absorbancy ε (120) at the maximum absorption wavelength of the laminate was measured. A value determined by subtracting the absorbancy ε (0) from the absorbancy ε (120) was defined as a color development density. Both the first laminates and second laminates had a color optical density of 1.1.

A time required for the color optical density to decrease to 1/2 was measured and defined as a color fading rate [t1/2 (sec.)]. Both the first laminates and second laminates had a color fading rate of 42 seconds.

### [Isocyanate Group Reproduction Test]

Isocyanate groups in the urethaneurea resin layer of the first laminate were eliminated by humidification treatment. This first laminate was heated at 120°C for 30 minutes. For the urethaneurea resin layer of the heated first laminate, the presence or absence of a peak attributed to isocyanate groups at 2200 to 2300 cm⁻¹ was confirmed using Fourier transform infrared spectroscopy (FT-IR) analysis, and evaluated in accordance with the following evaluation criteria. The results are presented in Table 1.

### -Evaluation Criteria-

1: A peak attributed to isocyanate groups was detected.
2: No peak attributed to isocyanate groups was detected.

### [Adhesiveness Evaluation for Second Laminate (Lens)]

The adhesiveness between the first optical substrate and the second optical substrate in the obtained second laminate (lens) was evaluated according to the following method. The lens was cut out so as to have a width of 10 mm, then a cemented carbide blade scraper was pressed against the interface between the first and second optical substrates to check the presence or absence of peeling. The results were evaluated in accordance with the following criteria. The results are presented in Table 1.

### -Evaluation Criteria-

1: The first optical substrate and the second optical substrate are easily peeled off from each other.
2: The first optical substrate and the second optical substrate are not easily peeled off from each other.

**[Table 1]**

| | Adhesive composition | | First laminate | | Second laminate | |
|---|---|---|---|---|---|---|
| | Blocked isocyanate | | First optical substrate | Reproduction of NCO group | Second optical substrate | Adhesiveness |
| | Type | Amount | | | | |
| Example 1 | B-1 | 5.6 | TAC1/TAC1 | 2 | Urethaneurea | 2 |
| Example 2 | B-1 | 0.5 | TAC1/TAC1 | 2 | Urethaneurea | 2 |
| Example 3 | B-1 | 10 | TAC1/TAC1 | 2 | Urethaneurea | 2 |
| Example 4 | B-1 | 100 | TAC1/TAC1 | 2 | Urethaneurea | 2 |
| Example 5 | B-2 | 5.6 | TAC1/TAC1 | 2 | Urethaneurea | 2 |
| Example 6 | B-3 | 5.6 | TAC1/TAC1 | 2 | Urethaneurea | 2 |
| Comparative Example 1 | - | - | TAC1/TAC1 | 1 | Urethaneurea | 1 |
| Example 7 | B-1 | 5.6 | TAC1/TAC1 | 2 | Thiourethane | 2 |
| Example 8 | B-1 | 5.6 | TAC1/TAC1 | 2 | Thioepoxy | 2 |
| Example 9 | B-1 | 5.6 | CR39 | 2 | Acryl | 2 |
| Comparative Example 2 | - | - | CR39 | 1 | Acryl | 1 |

In the above table, the amount of the blocked isocyanate refers to a solid content expressed by "parts by mass" based on 100 parts by mass of the urethane prepolymer.

Preferred embodiments of the present disclosure are appended below.
[1] An adhesive composition containing:
   a urethane prepolymer having an isocyanate group on its terminal;
   a blocked isocyanate having an isocyanate group protected by a blocking agent; and
   an organic solvent.
[2] The adhesive composition according to [1], in which the urethane prepolymer contains a reactant of an aromatic polyisocyanate compound, a poly(thi)ol compound, and a chain extender.
[3] The adhesive composition according to [1] or [2], in which a proportion of the blocked isocyanate to a total of the urethane prepolymer and the blocked isocyanate is 1 to 40 mass%.
[4] The adhesive composition according to any one of [1] to [3], in which the blocked isocyanate has a plurality of the protected isocyanate groups.
[5] The adhesive composition according to any one of [1] to [4], in which a ratio W1/W2 of a number-average molecular weight W1 of the urethane prepolymer to a relative molecular mass W2 of the blocked isocyanate is 1 or higher and 3,000 or lower.
[6] An adhesive composition according to any one of [1] to [5], in which the blocking agent contains a pyrazole compound.
[7] A laminate including:
   a first optical substrate; and
   a urethane(urea) resin layer having a blocked isocyanate group, which is a coating film made of the adhesive composition according to any one of [1] to [6] and laminated on the first optical substrate.
[8] The laminate according to [7], including an isocyanate group-containing urethane(urea) resin layer obtained by dissociating a blocking agent from the blocked isocyanate group.
[9] The laminate according to [8], further including a second optical substrate laminated on the isocyanate group-containing urethane(urea) resin layer.
[10] The laminate according to any one of [7] to [9], in which the first optical substrate includes a resin film or a resin lens.
[11] The laminate according to [10], in which the resin film contains at least one resin selected from a group consisting of a cellulose resin, an acrylic resin, a methacrylic resin, a polyurethane resin, a polyurethaneurea resin, a polyamide resin, a polyester resin, a polyimide resin, an epoxy resin, a polyolefin resin, a polyvinyl alcohol resin, and a polycarbonate resin.
[12] The laminate according to [10], in which the resin lens contains at least one resin selected from a group consisting of a polyester resin, a polyamide resin, an allyl resin, an acrylic resin, a methacrylic resin, a polyurethane resin, a polyurethaneurea resin, a polythiourethane resin, a polythiourethaneurea resin, a polythioepoxy resin, and a polycarbonate resin.
[13] An optical article including the laminate according to any one of [7] to [12].
[14] A lens including the optical article according to [13].
[15] Eyeglasses including the lens according to [14].
[16] An adhesive composition containing:
   a water-dispersible urethane resin;
   a blocked isocyanate having an isocyanate group protected by a blocking agent; and
   water.
[17] A method for producing a laminate, including applying the adhesive composition according to any one of [1] to [6] onto at least one main surface of a first optical substrate and then drying the adhesive composition to form a blocked isocyanate group-containing urethane(urea) resin layer.
[18] A method for producing a laminate, including heating the laminate obtained by the method according to [17] at 60 to 150°C to dissociate a blocking agent from the blocked isocyanate group, thereby obtaining an isocyanate group-containing urethane(urea) resin layer.
[19] The method according to [18], including:
   forming a coating film made of a curable composition on the isocyanate group-containing urethane(urea) resin layer; and curing the coating film.

## Claims

1. An adhesive composition comprising:
a urethane prepolymer having an isocyanate group on its terminal;
a blocked isocyanate having an isocyanate group protected by a blocking agent; and
an organic solvent.

2. The adhesive composition according to claim 1, wherein the urethane prepolymer includes a reactant of an aromatic polyisocyanate compound, a poly(thi)ol compound, and a chain extender.

3. The adhesive composition according to claim 1, wherein a proportion of the blocked isocyanate to a total of the urethane prepolymer and the blocked isocyanate is 1 to 40 mass%.

4. The adhesive composition according to claim 1, wherein the blocked isocyanate has a plurality of the protected isocyanate groups.

5. The adhesive composition according to claim 1, wherein a ratio W1/W2 of a number-average molecular weight W1 of the urethane prepolymer to a relative molecular mass W2 of the blocked isocyanate is 1 or higher and 3,000 or lower.

6. An adhesive composition according to claim 1, wherein the blocking agent comprises a pyrazole compound.

7. A laminate comprising:
a first optical substrate; and
a urethane(urea) resin layer having a blocked isocyanate group being a coating film made of the adhesive composition according to claim 1 and laminated on the first optical substrate.

8. The laminate according to claim 7, comprising an isocyanate group-containing urethane(urea) resin layer obtained by dissociating a blocking agent from the blocked isocyanate group.

9. The laminate according to claim 8, further comprising a second optical substrate laminated on the isocyanate group-containing urethane(urea) resin layer.

10. The laminate according to claim 7, wherein the first optical substrate comprises a resin film or a resin lens.

11. The laminate according to claim 10, wherein the resin film contains at least one resin selected from a group consisting of a cellulose resin, an acrylic resin, a methacrylic resin, a polyurethane resin, a polyurethaneurea resin, a polyamide resin, a polyester resin, a polyimide resin, an epoxy resin, a polyolefin resin, a polyvinyl alcohol resin, and a polycarbonate resin.

12. The laminate according to claim 10, wherein the resin lens contains at least one resin selected from a group consisting of a polyester resin, a polyamide resin, an allyl resin, an acrylic resin, a methacrylic resin, a polyurethane resin, a polyurethaneurea resin, a polythiourethane resin, a polythiourethaneurea resin, a polythioepoxy resin, and a polycarbonate resin.

13. An optical article comprising the laminate according to claim 7.

14. A lens comprising the optical article according to claim 13.

15. Eyeglasses comprising the lens according to claim 14.

16. An adhesive composition containing:
a water-dispersible urethane resin;
a blocked isocyanate having an isocyanate group protected by a blocking agent; and
water.

17. A method for producing a laminate, comprising applying the adhesive composition according to claim 1 onto at least one main surface of a first optical substrate and then drying the adhesive composition to form a blocked isocyanate group-containing urethane(urea) resin layer.

18. A method for producing a laminate, comprising heating the laminate obtained by the method according to claim 17 at 60 to 150°C to dissociate a blocking agent from the blocked isocyanate group, thereby obtaining an isocyanate group-containing urethane(urea) resin layer.

19. The method according to claim 18, comprising:
forming a coating film made of a curable composition on the isocyanate group-containing urethane(urea) resin layer; and
curing the coating film.
